# NEW EUROPEAN PATENT SPECIFICATION

(11) **EP 3 194 105 B2**
(45) Date of publication and mention of the opposition decision: **26.11.2025**
(45) Mention of the grant of the patent: 27.07.2022
(21) Application number: 15766199.2
(22) Date of filing: 09.09.2015
(51) Int. Cl.: B23K 13/01, B23K 37/047

(54) **METHOD, APPARATUS AND VEHICLE FOR WELDING RAILS**
VERFAHREN, VORRICHTUNG UND FAHRZEUG ZUM VERSCHWEISSEN VON SCHIENEN
PROCÉDÉ, APPAREIL ET VÉHICULE POUR LE SOUDAGE DE RAILS

(30) Priority: 16.09.2014 GB 201416326
(43) Date of publication of application: 26.07.2017
(73) Proprietor: Network Rail Infrastructure Limited, London SE1 8SW (GB)
(72) Inventor: MATTHEWS, Nicholas, Tewkesbury Gloucesterschire GL20 5FS (GB); HEMPSHALL, John, Rotherham South Yorkshire S60 4AF (GB)
(74) Representative: Cleveland Scott York
(86) International application number: PCT/GB2015/052600
(87) International publication number: WO 2016/042294

(56) References cited:
- EP-A1- 0 761 378
- CA-A- 740 174
- FR-A1- 2 399 299
- US-A- 2 250 869

## Description

The present invention relates to a method and apparatus for welding railway rails. It has particular application to welding railway rails in situ, such as in place in a railway, and also to welding together rails that are fixed in place as part of a larger assembly such as a part or panel of a track junction or crossing, but is not limited thereto.

In the past, railways were laid by butting rails end-to-end, and connecting them with metal plates known as fishplates. As a train passes over a rail joint of this type, there is inevitably a slight shock due to the small gap between the ends of the rails. In many modern railways, rails (lengths of rail) are welded together to form a continuous welded rail. This enables a smooth connection between the rails, substantially avoiding any shock as a train passes over the joint. This both reduces rail wear and enables faster running of the trains. Consequently, the ability to weld rails is important for high speed rail operation.

When railways are being repaired or re-laid, it is common to transport lengths of rail to the work site by train. Long rails can be carried on special trains made up of rail-carrying waggons. Each rail extends over multiple rail-carrying waggons, and the rails are sufficiently flexible to accommodate curves in the track as the train travels. In the course of the railway repair or re-laying work, the new rails are laid and the ends are welded together.

The natural length of each rail varies with temperature owing to expansion and contraction of the metal of the rail. Since there are no gaps in continuous welded rail, which would allow movement of the rail to accommodate such expansion and contraction, continuous welded rails are subject to tension or compression forces as the temperature varies. In order to permit safe operation, and avoid the tension or compression in the rails from beginning excessive and leading to distortion or movement of the rails, continuous welded rail is laid so that the rails will be subject neither to tension nor compression, but will be unstressed, at a predetermined stress free temperature. This temperature varies from place to place, depending on the local climate. At the end of a rail-laying operation, before the final welded joint is made, the rails are stressed to bring them to the length they would have at the stress free temperature and the final welded joint is made in such a way that the continuous welded rail has the correct length to be free of stress at the required stress free temperature.

One known way of welding rails together is by flash butt welding. In this method, the rails are gripped near the ends that are to be welded together, and a high voltage is applied between the rails. The rail ends are brought together, and a high current flows through points on the rail ends that touch. The rail ends are then separated, and the current flows through electric arcs formed between the rail ends in a process known as flashing. The distance between the rail ends is adjusted continuously, to ensure that the current continues to flow, and the rail ends may tend to move towards each other as material is ejected from them during flashing. The electric current heats the ends of the rails, and when the welding temperature is reached, the rail ends are forced towards each other with a forging pressure in a weld upset stage, to create the weld. In order to form the weld properly, it is important to maintain adequate forging pressure for sufficient time during the upset stage, and during this stage the rails will move towards each other, forcing some material out from between the rail ends.

The flashing and arcing during the heating stage tends to clean the rail ends, and any remaining metal oxides or other impurities that may have been present on the rail ends typically flow preferentially into the material that is forced out from between the rail ends. As soon as the welding operation is complete the excess material is removed, and once the weld is cold the rail head is ground to follow the correct profile in order to make the weld perfectly smooth for trains running over it.

In order for the weld to form properly, it is known to preheat the rail ends before the flash butt welding operation, and sometimes also to post-heat the area around the weld after the welding operation. This is done to ensure that there is a sufficiently even heating and cooling of the weld, taking into account the shape of the rail. This avoids problems that might arise because the web and the foot of the rail tend to heat up and cool down more quickly than the much thicker rail head. Additionally, it reduces problems in weld quality that may arise if the weld cools down too quickly.

Flash butt welding typically consumes about 30 mm of rail length in each welded joint. In practice, this consumption of rail in each welded joint is not normally a problem in the laying of plain line track (track without switches (also known as points or turnouts) or crossings). At the end of a rail laying operation, when the rail has been pre-stressed and before the final welded joint is made, the final piece of rail is cut to a length that includes the length of rail that will be lost in the welding process in addition to the length of rail required to reach the rail it is to be welded to. During the initial flash heating phase, the excess length that will be consumed in the welding process means that this final piece of rail does not fit neatly in position along the track but is bowed out. However, during the upset period the rails are forced together under the forging pressure and as the rail is consumed in the welding operation the final piece of rail acquires the correct length and lies correctly in position.

Flash butt welding equipment tends to be large and expensive, and is relatively difficult to transport to the required location for welding rails in situ. Additionally, it consumes a lot of electricity (typically operating at 500 kW during a welding operation). However, once the equipment is in position the process is reasonably fast (taking approximately 2 minutes to form a welded joint), and with a flash butt welding machine that is designed to run along a railway, it is possible to perform a large number of welded joints in a relatively short time.

US 2250869 discloses a flash butt welding apparatus mounted on a railway train. Individual rails, stored on a railway car near one end of the train are fed one at a time into the welding apparatus where they are welded together by flash butt welding to produce longer welded rail lengths which are stored extending over several welded rail storage cars. These longer welded rail lengths can be off-loaded where they are needed and welded together in any suitable manner to form track. The need to weld the longer welded rail lengths together can be avoided by welding the original rails together into a single continuous welded rail that is fed off the end of the welding train and laid directly as track.

An alternative welding method is aluminothermic welding (also known as the Goldschmidt process). In this method, the ends of the rails are cleaned and spaced slightly apart from each other. Typically, the rail ends are cleaned by cutting off a short length, since the cutting process inherently leaves clean cut ends. An appropriately shaped mould (e.g. a hardened sand mould) is clamped around the rail ends and then the rail ends are heated, for example with a gas torch. Once the rails are heated, metal to be used in the weld is melted in a crucible above the mould, typically using the thermite reaction. The molten metal flows from the crucible into the mould, forming the welded joint. Slag formed during the welding process, being lighter than the metal, floats to the surface and therefore does not end up in the weld between the weld ends. Once the weld is cool enough, the mould can be taken away and surplus weld material removed. When it is cold, the welded joint is ground to the correct profile to allow trains to run smoothly over it.

Unlike flash butt welding, the aluminothermic welding process does not consume any length of rail, because the gap between the rails is filled by the weld material poured into the mould, and it is not a forge weld so that there is no upset process in which the rail ends are pushed towards each other. Additionally, this process has the advantage that it requires relatively small and simple apparatus, which can be transported easily to the work site for in situ welding, and welding can be carried out by a small team of, for example, two people.

However, the process is slow and it can take up to two hours to carry out the entire welding process. Accordingly, aluminothermic welding is useful when a small number of welded joints are required in a remote location, and for making welded joints when working on little-used track. On the other hand, it is less convenient when work is carried out on a heavily-used stretch of track. When track engineering work is carried out overnight, on a line that is heavily used during the day, the track may be closed to trains for only eight hours (or even less) at a time. If the welding operation required at the end of the engineering work, in order to restore the track to a condition suitable for trains to run over it, takes two hours, then a quarter of the total track closure time has to be set aside for the final welding operation, substantially cutting in to the amount of time available to carry out the work that is to be done.

Both flash butt welding and aluminothermic welding have the advantage that they do not require a protective atmosphere, which can be difficult to provide when welding railway rails in situ.

Other types of welding have been proposed for railway rails, although they are not widely used. JP-A-2001-105158 proposes a form of diffusion welding in which the joint to be welded is enclosed in an inert argon atmosphere. A 30 µm thick insert is placed between the surfaces to be joined. The insert is composed of a different material from the rails. The joint is heated by induction heating to a temperature above the liquidus temperature of the insert but below the solidus temperature of the rails, and the rails are pressed together. A special shape is proposed for the induction heating coil, to help the rail to heat evenly in spite of the different thicknesses of different parts of the rail. A similar process is disclosed in EP 0761378, in which a 40 µm thick insert is used. The insert is Ni-Si-B (melting point 1050°C) or Cr-Si-B (melting point 1100°C). The insert is placed between the ends of the rails to be joined and the rails are pressed together with a pressure of 5MPa. The rails are high manganese cast steel (melting point 1375°C) in the case of a crossing rail or carbon steel (melting point 1470°C) in the case of a regular rail. An inductive heating coil is used to heat the bonding region to 1200°C. The insert melts and diffuses into the bonding faces of the rails to fasten them together.

US 2751479 (filed in 1954) discloses a method of induction welding of rails. It addresses a problem in which inductive heating tends to heat the outer surface of a member more than the interior, so that if heating of a large cross-section member is continued until the interior reaches welding temperature, the outside will have far exceeded the welding temperature. It proposes that the two members (e.g. rails) to be joined are separated by an intermediate member of the same cross-section. The faces of the intermediate member that abut the rails are hollowed out so that the member only contacts the rails around its outer edge. As the intermediate member is heated by induction, the outer edges are heated faster but lose their heat by conduction to the rails whereas the interior of the intermediate member, which is not in contact with the rails because this part of the surface is hollowed out, retains its heat. Therefore the interior heats up as rapidly as the outer edge. When push-up occurs, the heat of the interior portion of the intermediate member is transferred rapidly to the interior portions of the rails to bring them up to the welding temperature. The induction heating coil has a configuration conforming to the outline of the rail sections to be welded. This document does not mention any possible oxidation of the surfaces to be joined as a consequence of the air trapped by the hollowed out surfaces of the intermediate member.

FR 2399299 (filed in 1977) and equivalent GB 2001891 also address the problem that induction heating does not provide uniform heating of parts having an irregular cross-section and GB 2001891 refers to US 2751479. In FR 2399299 and GB 2001891 it is proposed weld rails by induction heating for a first period of time with a current at 1 to 3 kHz to heat up the more massive sections of the parts followed by heating for a second period of time with a current at two to four times the initial frequency to bring the thinner sections, and thus the whole of the two ends of the rails, to the forging temperature. At the end of the second period, the pressure exerted on the ends of the rails is increased rapidly to a forging pressure. The inductor is divided into two equal parts which can be closed up and brought into contact to form an inductor having an inside face that is substantially parallel to the cross-sectional outline of the rails to be joined.

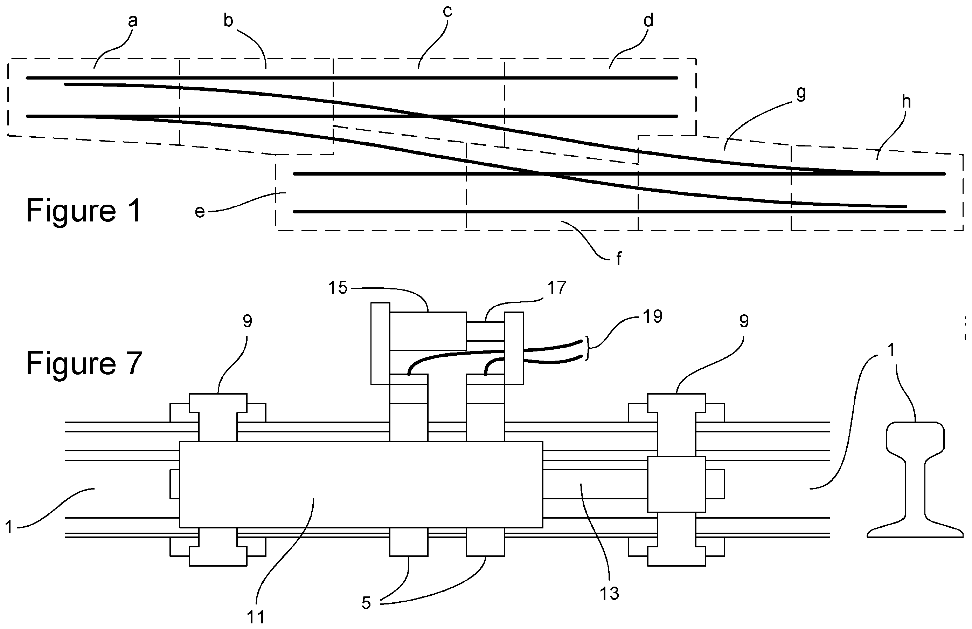

Figure 1 shows a crossover enabling a train to cross from one track to another parallel track. The crossover includes two sets of points. The parts of the track that move to change the path to be followed by a train are known as switches. The places where the paths of the rails cross each other, are known as crossings (or frogs). Thus the crossover has two switches and two crossings. The maximum permitted speed of a train that changes tracks using the crossover will depend on the radius of the curves it travels over and therefore if a high speed is required all the curves will have a large radius. This has the consequence that the points (switches) are very long. Additionally, in order to ensure smooth running of high speed trains, all rail joins involved must be welded and the geometry of the entire crossover is carefully calculated and the crossover must be constructed so as to follow this geometry accurately.

In order to ensure correct and accurate construction, the crossover will be built in a factory, and must then be transported to the location where it is to be installed. However, the size of the crossover means that it is not practical to transport it in a single piece. Additionally, even if some way could be found to mount it on a railway train without damage, the crossover cannot flex around track curves, unlike lengths of ordinary rail. Therefore the crossover of Figure 1 is divided into eight parts, shown with broken lines and labelled a to h in Figure 1, each of which is small enough to be transported to the location where the crossover is to be installed. The eight parts then have to be assembled on site precisely in the correct positions.

It will be appreciated that the rails involved in the crossover will need to be joined to each other at the edges of each of the eight parts. Therefore the arrangement shown in Figure 1 requires twenty-two welded track joints within the crossover, in addition to the eight welded track joints required to join the crossover to the remainder of the track. It is not possible to use flash butt welding for these welded joints because there is no way to accommodate the consumption of about 30 mm of rail at each welded joint. Even if it was possible to move the rails to accommodate the consumption of rail by the welding process, this would inevitably upset the geometry of the rails, which must be avoided. Furthermore, various other components need to be fixed to the rails in the crossover of Figure 1, and these must be fixed at the correct positions. These are either already fixed in place in the factory, or fixing points (such as pre-drilled holes) are provided at the factory to allow fixing at the correct position when the crossover is being assembled in position on the railway. If a rail is moved, to accommodate the consumption of rail in a welding process, the components or their fixing points will inevitably also be moved, with the result that the components will no longer be in their correct positions. Additionally, some of the joints (especially at the toes of the points) have to be formed in a very restricted space, and there is not room to fit a flash butt welding head into the space available. Accordingly, the joints in the crossover of Figure 1 will normally be welded by aluminothermic welding. Although aluminothermic welding provides a high quality welded joint without disturbing track geometry, the time taken to perform the large number of welds required in the crossover of Figure 1 means that the two tracks involved will have to be closed for an extended period, which would cause considerable inconvenience if the tracks are heavily used.

A similar issue can arise during the manufacture of the crossover of Figure 1. It may be convenient in the factory to make each of the parts a to h in separate sub-parts. These sub-parts are then joined together prior to transportation to form the largest parts that can be accommodated on the wagons used to transport them (i.e. the eight parts a to h shown in the Figure). When the sub-parts are joined together, the rails have to be welded to each other. The consumption of rail during this welding operation is disadvantageous for the reasons discussed above, and so aluminothermic welding is used. As a result, the joining of the sub-parts in the factory can take an undesirably long time.

As set out in claim 1, an aspect of the present invention provides a method of welding railway rails comprising: pushing the ends of first and second rails away from each other; placing a metal insert between the ends of the first and second rails; heating the ends of the first and second rails by electromagnetic induction, to reach a welding temperature; forcing the ends of the first and second rails towards each other with a forging pressure, while the insert is between the ends of the first and second rails, so as to move the rails towards each other and displace material in an upset phase to create a forge welded joint and thereby welding each of the first and second rails either to the insert or to the other of the first and second rails.

Another aspect of the present invention provides apparatus for welding railway rails, as set out in claim 14.

Optional features are set out in the remaining claims.

By using an insert, the consumption of rail during the welding process can be eliminated or substantially reduced as compared with flash butt welding. The induction welding process, in which the rail ends are heated to welding temperature by induction heating, enables a metal insert to be used without interfering with the welding process. Because the insert eliminates or reduces the consumption of rail during the welding process, the method of induction welding with an insert can be used in at least some locations where flash butt welding would not be suitable. The induction welding process is fast (typically taking less than 5 minutes, and so is comparable in speed to flash butt welding), and therefore can be more convenient than aluminothermic welding if there are time constraints on the overall job of which the rail welding forms a part. Induction welding typically requires less power than flash butt welding. This can lead to cost savings from reduced power consumption. Additionally, in some circumstances it may be possible to power the apparatus performing this process from a pre-existing external electricity supply rather than using a dedicated electricity generator. In the case of mobile apparatus, this can lead to a reduction in cost, size and weight of the apparatus.

The invention may be used to weld rails in situ, in position on a railway. It may also be useful in other environments, such as when making the parts of a prefabricated track section such as the crossover of Figure 1, in which the individual parts may themselves be made of smaller prefabricated parts or panels that need to be joined together without distorting the track geometry, for example in a factory prior to transportation. In at least some embodiments, the invention is usable to join rails while they are fixed to other components, such as rails that are clipped to rail supports such as sleepers or bearers. It may be useful to weld together rails while they are fixed to other components, for example when it is important that the welding operation does not to disturb the existing track geometry, and to avoid the extra work involved in unfixing the rails from the other components prior to welding and re-fixing them afterwards.

The ends of the rails are pushed apart (e.g. by the length of rail consumed in the welding process) before the insert is placed in position, thereby allowing a longer insert to be used. Induction heating may be performed with a split head that can be opened so as to be placed around a rail in situ and then closed to carry out induction heating.

According to a first aspect of the present invention there is provided a method of welding rails, comprising moving the ends of the rails to be welded apart from each other, placing a metal insert (preferably at least 6 mm and more preferably at least 10 mm long) between the rail ends, heating the rail ends to welding temperature by induction, and forcing the heated rail ends against the insert with a forging pressure to create a welded joint (in practice, usually forming a weld at each end of the insert). Normally the ends (at least) of the insert are also heated to welding temperature. The temperature midway along the insert may be lower than at the ends.

The terms "forging force" and "forging pressure" are used in this application to mean a force or pressure that presses the ends of the rails together during the welding process so as to cause displacement of material.

The welding temperature may be about 1300 °C, e.g. in the range of 1250 °C to 1350 °C.

During the upset phase, in which the rail ends are forced together with a forging pressure, the rails may be pressed together with a force of 250 to 350 kN, e.g. in the range of 280 to 300 kN.

Preferably the ends of the rails are cleaned before the insert is placed between them. For example, a piece may be cut off the end of each rail. If desired, the ends of the insert and/or the ends of the rails may be coated with flux, but this is not always necessary. Preferably, the ends of the rail press against the insert while the rail ends are heated by induction, which helps to keep the insert in place. Pressing the ends of the rail against the insert also helps to reduce the extent to which the rail ends and the insert ends are in contact with air, which reduces any need to use flux. The force used to press against the insert during the heating stage is typically about 10% of the force used during forging, and so a force of 25 to 35 kN, e.g. in the range of 28 to 30 kN, may be used during the heating stage.

The process can be carried out in air. It is not necessary to provide a protective atmosphere of an inert gas around the rail ends being joined.

In one embodiment, the insert has a length of 10 to 12 mm longer than the space between the ends of the rails before the rails are moved apart (and after the rails have been cleaned in the case that the rails are cleaned before they are moved apart). Since it is anticipated that about 10 to 12 mm of rail will be consumed in the rail welding process, this has the consequence that the ends of the rails after welding have approximately the same separation as they had before welding, taking into account any length that is lost in the cleaning process, so that the stress in the rails after welding is approximately the same as the stress in the rails before welding.

In an alternative embodiment, the insert is less long, with the result that the rails after welding may be under greater tensile stress than they were before welding. In this alternative embodiment, it is not necessary to move the rails apart from each other by as great a distance, in view of the reduced length of the insert, and this may be advantageous if it is difficult to move the rails further without disturbing the track geometry. The increased tensile stress in the rails after welding is not necessarily a disadvantage, particularly if the welding operation is carried out while the rails are at a temperature which is less than the desired stress free temperature for the rails. In this case, it will be necessary to stretch the rails to bring them to the correct level of stress for the actual rail temperature (i.e. so that the rail has no stress at the required stress free temperature). Therefore the creation of tensile stress by the welding process can contribute to the required stressing of the rail.

In practice, the length of the insert will depend on several factors, such as the length of the gap between the rail ends after cleaning or cutting, the distance that the rail ends can be pushed apart, and the distance by which it is desired to stretch the rails to be joined. Preferably the insert is at least 6 mm long, since this is approximately the minimum gap that can be cut between the rails by a rail saw, in order to obtain clean rail ends. More preferably, the insert is at least 10 mm long, so that it can substantially compensate for the length of rail lost in the induction welding process. On the other hand, the insert might be as long as 40 mm.

If the gap between the ends of the rails, after cutting with a rail saw, is 6 mm, and then it is only possible to move the ends of the rails apart only by about 2 mm each (therefore 4 mm in total), there will only be about 10 mm between the ends of the rails after they have been moved apart and so this will be the maximum possible length of the insert. On the other hand, if the rail ends can be moved about 10 mm apart in total (5 mm each), so as substantially to compensate for the length of rail that will be lost in the induction welding process, and the gap between the rail ends after cutting with a rail saw is 6 mm, the insert can be 16 mm long. If the gap cut by the rail saw is larger, a longer insert can be used.

Typically, the insert will have the same profile (cross-sectional shape) as the rails that are being joined.

The insert may be made of the same material as the rails or a different material. In the welding process, the insert and the ends of the rails should be heated to a temperature below the liquidus temperature of the insert at atmospheric pressure, to reduce the risk that the insert will melt and flow out of the space between the ends of the rails. The ends of the rails and at least the ends of the insert will normally be heated to a temperature above the solidus temperature of the insert at atmospheric pressure.

According to a second aspect of the present invention there is provided apparatus for welding first and second rails together, comprising first clamping means for gripping the first rail, second clamping means for gripping the second rail, means for applying force to move the first and second clamping means away from each other and for applying force to move the first and second clamping means towards each other, and an induction heating coil arranged to be placeable around the ends of the first and second rails between the first and second clamping means, and to be removable from the rails after they are welded together. Preferably, the induction heating coil is a split coil, enabling it to be opened to pass around the rails by movement in a direction transverse to the longitudinal direction of the rails, and to be closed around the rails for performing induction heating.

In one embodiment, there are first and second induction heating coils. Accordingly, one induction heating coil can heat the end of the first rail and the other induction heating coil can heat the end of the second rail. The induction heating coils may be arranged so as to be movable towards and away from each other, in a direction parallel to the length of the rail, thereby to accommodate a range of separation distances between the ends of the first and second rails during the induction heating process.

Preferably, the apparatus includes a control system and means for supplying force to move the first and second clamping means towards and away from each other. Preferably, the clamping means are moved towards and away from each other by hydraulic pressure. An electric power supply, typically including an electric generator, may also be present.

Preferably the apparatus is self-contained, except that it may need an external source of electricity if it does not include an electric generator, and it is preferably mobile. For example, the apparatus may be integrated into a vehicle (preferably self-propelled), or it may be mounted on a frame or in a container that can in turn be mounted on a road or rail vehicle. The use of a frame or container allows the apparatus to be moved from vehicle to vehicle as required

Accordingly, an aspect of the present invention provides a vehicle comprising the welding apparatus. The vehicle may be adapted for movement over the ground or may be adapted for movement along a railway track. Preferably, it has means such that it can move both along a railway track and over the ground.

Embodiments of the present invention, given by way of non-limiting example, will now be described with reference to the accompanying drawings.
Figure 1 shows the track layout for a crossover between two parallel tracks, manufactured in eight parts.
Figures 2(a) to 2(e) show schematic side views of steps in a rail welding process in an embodiment of the present invention.
Figures 3(a) to 3(e) show schematic side views of steps in an alternative rail welding process in an embodiment of the present invention.
Figures 4(a) and 4(b) show an end view (a) in a closed position and (b) in an open position of an induction coil unit used in an embodiment of the present invention.
Figure 5 is a side view of the induction coil unit.
Figure 6 is a side view of a pair of induction coil units.
Figure 7 shows the main components of a welding head for use in an embodiment of the present invention.
Figure 8 shows the main components of a welding apparatus in an embodiment of the present invention.
Figure 9 show a vehicle carrying the welding apparatus of Figure 8.
Figure 10 shows a container carrying the welding apparatus of Figure 8.

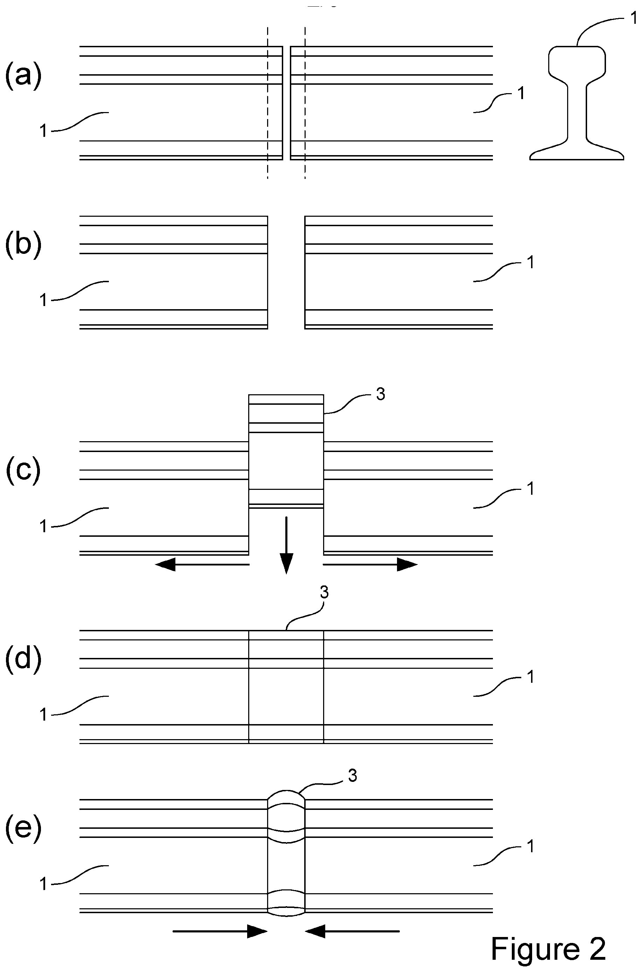

Figure 2 shows schematically the main steps in a method of welding railway rails 1 together in situ, according to one embodiment of the present invention. Figures 2(a) to 2(e) show the end portions of the rails 1 in side view, and for ease of understanding Figure 2(a) also shows a rail in end view.

Although it may not always be necessary, it is usually preferable to clean the ends of the rails 1 before welding. One way to do this is to cut a short distance off the end of each rail 1. This is shown in Figure 2(a), where the broken lines indicate where the new end face of each rail 1 will be after cutting. The positions of the rails 1 after cutting is shown in Figure 2(b).

In the present embodiment, it is intended that, following the welding operation, the rails 1 should neither have moved nor be placed under tensile stress. It is anticipated that the induction welding operation will consume about 10 mm to 12 mm length of rail. Therefore, each rail 1 is pushed back by 5.5 mm in order to increase the gap between them by 11 mm, corresponding to the length of rail that will be consumed in the welding process, and an insert 3, which will partially be sacrificed during the welding operation, is inserted into the gap, as shown in Figure 2(c). The insert 3 will normally have the same cross-section as the rails 1, and may be made of the same or a different material, depending on the requirements for obtaining a strong welded joint. In order to move the ends of the rails 1 apart, as shown in Figure 2(c), each rail 1 is gripped near its end by rail grippers or clamps (not shown), which are then forced apart (typically using a hydraulic cylinder) to separate the rails. Hydraulically driven rail clamps are well-known in the art. It may be necessary to unclip the rails from their supports (bearers or sleepers) along part of their length before pushing them apart. The unclipped length of rail can bow out from its correct position to accommodate the movement of the end of the rail.

In Figure 2(b) there might be a gap of, for example, 8 mm between the ends of the rails 1 after they have each been cut in order to obtain a clean end. This is a reasonably practical gap to create between the ends of the rails by cutting the ends with a rail saw. Consequently, in Figure 2(c) the rails 1 are 19 mm apart (11 mm + 8 mm = 19 mm). The insert 3 is 19 mm long and fills the gap.

Once the insert 3 has been inserted, the rails 1 are in the state shown in Figure 2(d), and are ready for welding. Preferably, the force used to separate the rails 1 is relaxed at least partially in this state, so that the rails 1 grip the insert 3 firmly and hold it in place. If necessary, preheating can be carried out at this stage, for example using a gas flame or an induction coil. For the welding process, an induction welding head is fitted round the position of the insert 3 and the ends of the rails 1. The induction welding head may have a single induction coil which will heat the ends of both rails 1, and possibly the full length of the insert 3 as well, or alternatively a separate induction coil may be provided for the end of each rail 1. The choice will depend in part on the size of the insert 3 used and the extent to which it is desired to heat the full length of the insert 3.

During the welding operation, heat is induced in the end regions of the rails 1 by electric current flowing in the coil or coils of the induction head. Once the welding temperature is reached, the welding operation moves from its heating stage to its upset stage and the ends of the rails 1 are forced together with a forging force (which can be provided if necessary by driving the clamps near the ends of each rail towards each other), in order to create a forge welded joint between the ends of the rails 1. The welded joint normally comprises the insert 3 and a weld at each end of the insert 3, welding the insert 3 to the corresponding rail 1. Each weld normally has a grain boundary and a heat-affected zone on each side of the grain boundary. Depending on the pattern of heating and the length of the insert 3, the heat affected-zone within the insert 3 arising from the weld at one end of the insert may be separate from the heat-affected zone arising from the weld at the other end of the insert, or the heat-affected zones may merge.

The movement of the ends of the rails 1 towards each other to create the forge welded joint during the upset phase of the welding operation inevitably results in some material being displaced sideways from the welding zone. The displaced material can be removed, at least from the top and sides of the head of the rail, while the weld zone is still hot and the material is soft. This material may originate partially from the insert 3 and partially from the rails 1. However, because the upset length (the distance by which the rails 1 are moved towards each other to create the forge welded joint) is equal to the amount by which the rail ends were pulled apart from each other when moving from Figure 2(b) to Figure 2(c), the rails at the end of the welding operation as shown in Figure 2(e) are in the same position as they were in Figure 2(b), before they were pushed back, and are not under tensile stress. The length of the insert 3 has provided material both to bridge the gap between the ends of the rails 1 in Figure 2(b) and to compensate for the material lost in the forging process. Accordingly, this welding method can be used to form at least some of the welded joints required in the crossover shown in Figure 1 without distorting the track geometry in the crossover.

As discussed above, the ends of the two rails 1 are pushed together in the upsetting phase of the welding process, to form a forge welded joint, and it is estimated that around 10 to 12 mm of rail is consumed in the welding process. Accordingly, in the method of Figure 2, after the ends of the rails 1 have been cleaned, they are pulled back by a total of 10 to 12 mm, so that the loss of rail length in the welding process merely returns the rails to their original positions and the entirety of the rail length lost in the welding process is made up by the excess in the length of the insert 3 over the distance between the ends of the rails 1 before they are pushed back.

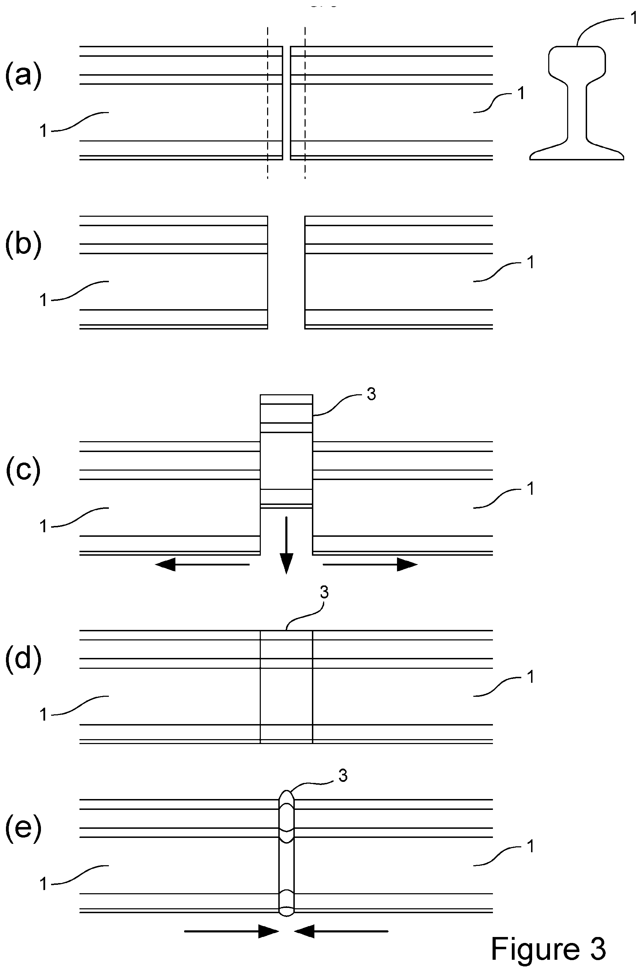

However, in practice it may not always be advisable, or even possible, to push the ends of the rails 1 apart by this much. The crossover of Figure 1 is built in a workshop, with highly accurate track geometry. In order to ensure and maintain the track geometry, the crossover is made as eight track panels a to h, and in each track panel the respective lengths of rail are clipped to bearers fixed accurately in the correct positions. In order to reduce the amount of work involved, and to avoid disturbing the track geometry, it is desirable not to unclip the rails from the bearers in the welding process. However, it is difficult to push the end of a rail 1 back by as much as 5 to 6 mm while the rail is clipped to the bearers, and any attempt to do so might cause the entire track panel concerned to move, which would itself upset the overall track geometry of the crossover. In these circumstances, it might be more realistic to push each rail end back by about 2 mm. This results in a slightly modified welding process, as illustrated in Figure 3.

Figures 3(a) to 3(e) correspond to Figures 2(a) to 2(e). Figures 3(a) and 3(b) are identical to Figures 2(a) and 2(b), and the steps of cleaning/cutting the ends of the rails 1 are the same as in the method of Figure 2. Accordingly, in Figure 3(b) the ends of the rails 1 are about 8 mm apart, as in Figure 2(b). However, when moving from the state shown in Figure 3(b) to the state shown in Figure 3(c), the end of each rail 1 is moved away from the other rail 1 by only 2 mm, so that the gap between the ends of the rails 1 increases by a total of 4 mm to make a gap in Figure 3(c) of 12 mm (as compared with 19 mm in Figure 2(c)). Accordingly, the insert 3 used in the process of Figure 3 is only 12 mm long.

After the insert 3 is placed in position, the induction welding process is carried out in the same way as in the method of Figure 2. In order to form a good welded joint, the upset length (i.e. the distance by which the end portions of the rails 1 are forced towards each other to create a forge welded joint) is the same in Figure 3 as in Figure 2. Because the rails 1 were not pulled apart from each other as much as in the process of Figure 2, the rails 1 in Figure 3 do not merely return to their original positions but have to be pulled towards each other by the rail clamps, placing the rails 1 under tension. In Figure 3, the insert 3 was 12 mm long, thereby providing sufficient rail length to fill the 8 mm gap between the ends of the rails 1 in Figure 3(b) and additionally contributing 4 mm towards the length of rail that is consumed in the welding process. Assuming that 11 mm of rail is consumed, this means that the rails 1 must contribute 7 mm (or 3.5 mm each) to the length of rail that is consumed in the welding process, and therefore the rails 1 will end up by being stretched by this much once the welded joint is formed, as shown in Figure 3(e).

The stressing of the rails 1 at the end of the welding process of Figure 3 is not necessarily problematic, even when it occurs in the welding of a region of track with complex precise geometry such as the crossover of Figure 1. The total loss of rail length in the welding process of Figure 3 is about 7 mm, which is much less than the 30 mm that is typically lost in a flash butt welding process. It is often the case that track work is carried out when the rails are at a temperature that is considerably less than the required stress free temperature of the rail (the stress free temperature is normally set to be towards the upper end of the temperature conditions that can be expected in normal weather conditions, and for example is 27°C in the United Kingdom). Consequently, at the end of the track welding process it will normally be necessary to tension the track to restore it to the correct stress free temperature, and the stress created in the track by the relatively short length of rail loss in the process of Figure 3 can often be absorbed in the stress restoration process.

As discussed above, the insert 3 is preferably at least 10 mm long. This enables it to provide enough material to fill the gap left by cutting the ends off the rails 1 in order to provide clean ends for the welding operation, since it will normally be possible to leave a gap of less than 10 mm between the ends of the rails after cutting. The additional length of the insert, beyond the length of the gap between the two rails, will depend on how far the rails will be pushed back. In some circumstances, it may only be possible to push each rail back by 2 to 3 mm, in which case an insert length of 12 to 16 mm will usually be appropriate. However, if the rails can be pushed back further, and it is not desired to introduce any tension into the rail after welding, an insert length in the range of 18 to 22 mm is likely to be appropriate. In general, the length of an insert is likely to fall within the range of 10 to 25 mm. Even longer inserts can be used, for example because the separation between the rails after cleaning is greater than usual or because the rail temperature while the work is being carried out is above the desired stress free temperature and so it is useful, from the point of view of stress restoration, to leave the rails in compression after welding. However, it becomes difficult to carry out the welding operation satisfactorily if the insert is too long, and it is anticipated that in practice the inserts are unlikely to exceed 40 mm.

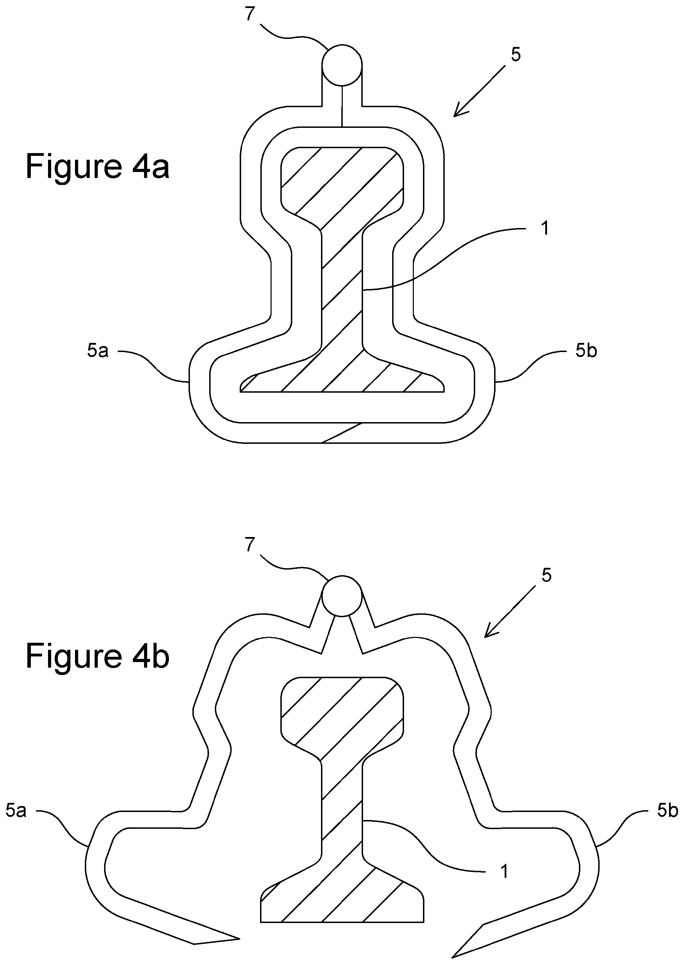

Figure 4 shows an end view of an induction coil unit that may be used in the induction welding processes described with reference to Figures 2 and 3. It might typically take about 50 to 60 kW of power, at a frequency of about 10 kHz.

The welding operation may be carried out in situ on a railway track, or in other situations where the rails are attached to further components such as sleepers. Therefore it is usually not possible to position the induction coil unit 5 around the rail 1, and remove the induction coil unit 5 from the rail 1 after welding, by passing the end of the rail 1 through the induction coil unit 5. Consequently, the induction coil unit 5 has a split coil construction and is formed of two parts 5a, 5b joined at a hinge 7. In Figure 4(a) the induction coil unit 5 is shown in its closed position, extending fully around the rail 1 and ready for induction heating of the rail 1. In Figure 4(b) the induction coil unit 5 is shown having been partially opened by rotation around the hinge 7, enabling it to be placed over and removed from the rail 1. The use of split coils is known in the art of induction welding, and does not need to be described further.

The induction coil unit 5 does not have a circular shape, as would conventionally be used for induction welding of pipes, but is formed to take account of the non-circular cross-sectional shape of the rail 1. The precise shape of the induction coil unit 5 will normally be chosen depending on the cross-sectional shape of the rails that it is intended to be used with. It should be noted that the shape of the induction coil unit 5 does not necessarily follow the cross-sectional shape of the rail 1 precisely. In order to obtain substantially uniform heating of the rail 1, and taking into account the different thicknesses of the different parts of the rail 1, the induction coil unit 5 may be shaped so as to come closer to some parts of the rail cross-section than to others. Additionally, different frequencies of the AC current supplied to the induction coil may be appropriate for heating different parts of the rail 1 and the insert 3, according to the different thicknesses of the different parts. Consequently, the current frequency may be varied over time to provide the desired heating effect, and/or two or more current frequencies may be applied to the induction coil simultaneously for at least a part of the induction heating period.

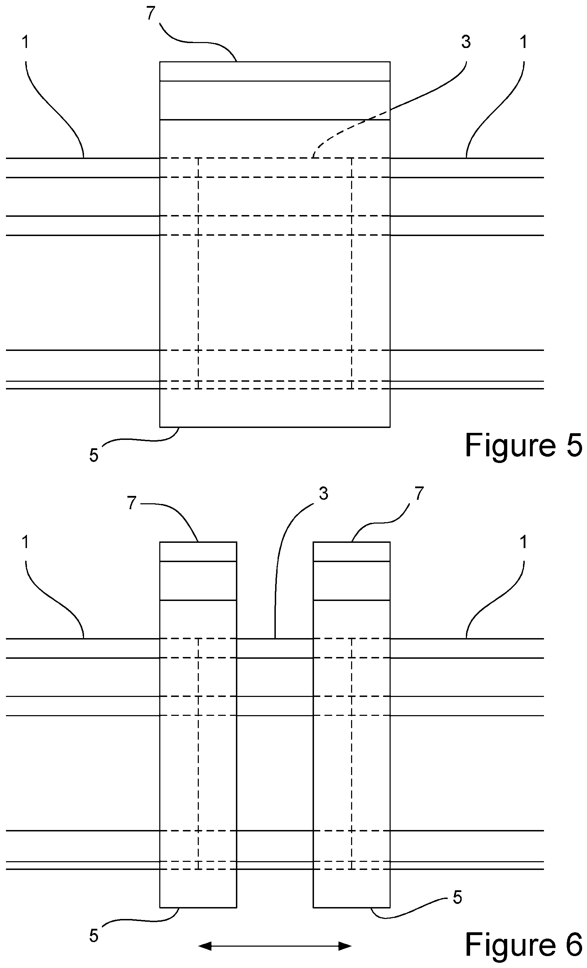

The induction coil unit 5 is shown in side view in Figure 5. As can be seen in Figure 5, the induction coil unit 5 is long enough so that it overlaps and heats the ends of both rails 1. Accordingly, it also encloses the insert 3. In order to avoid heating the insert 3 excessively, as compared with the rails 1, the coil in the coil unit 5 may be wound more densely where it encloses the ends of the rails 1, in order to heat these regions preferentially.

Figure 6 shows an alternative arrangement, in which two shorter induction coil units 5 are used, one placed around the end of each rail 1. Optionally, the induction welding apparatus may include means to move the two induction coil units of Figure 6 towards and away from each other, as indicated by the double arrow in Figure 6. This enables the induction welding apparatus to be used with a variety of lengths of insert 3.

Figure 7 shows schematically the main components for an induction welding head for welding railway rails in situ, according to one embodiment of the present invention.

First and second clamping means 9 are provided to grip the end portions of the first and second rails 1 respectively. A high power double action hydraulic cylinder 11 and piston 13 connect the two clamping means 9 and can apply strong and controlled forces to push the clamping means (and therefore the clamped end portions of the rails 1) apart or pull them together. In this way, the hydraulic cylinder 11 and piston 13 act as drive means for applying force to move the first and second clamping means towards each other and for applying force to move the first and second clamping means away from each other. In the present embodiment, the cylinder 11 and piston 13 are positioned so that they are alongside the rails 1 in use, in order to keep them out of the way of the induction coil units 5. Preferably, a second high power hydraulic cylinder 11 and piston 13 are provided on the other side of the rails 1, to ensure that pushing and pulling forces are applied symmetrically to the clamping means 9, and to avoid any tendency to twist the rails 1 by asymmetric application of force. The hydraulic cylinder 11 and piston 13 are connected to the clamping means 9 in a manner that ensures that they are spaced sideways from the rails 1 sufficiently to enable the induction coil units 5 to be inserted downwardly, and removed upwardly, from around the rail with the coil units 5 in their open position.

The arrangement of Figure 7 uses two separate induction coil units 5, as shown in Figure 6. They are supported by a small low power hydraulic cylinder 15 and piston 17 which can move the induction coil units 5 towards and away from each other, depending on the length of the insert 3 used on any particular occasion. It is not necessary to use a hydraulic cylinder and piston to drive the induction coil units, and any other convenient arrangement can be used, such as a worm screw drive. Electric cables 19 supply electric power to the induction coil units 5.

The hydraulic cylinders 11, 15 may be fitted with pumping handles for manual operation, or may have connections to receive pressured hydraulic fluid from a reservoir or pump.

The induction coil unit or units 5 and the hydraulic cylinder 15 and piston 17 (or other apparatus for moving the induction coil units 5) will normally be enclosed in a casing for protection, and a casing may also be provided around the high power hydraulic cylinder 11 and piston 13. A cooling system is normally provided to prevent the induction coil or coils from overheating.

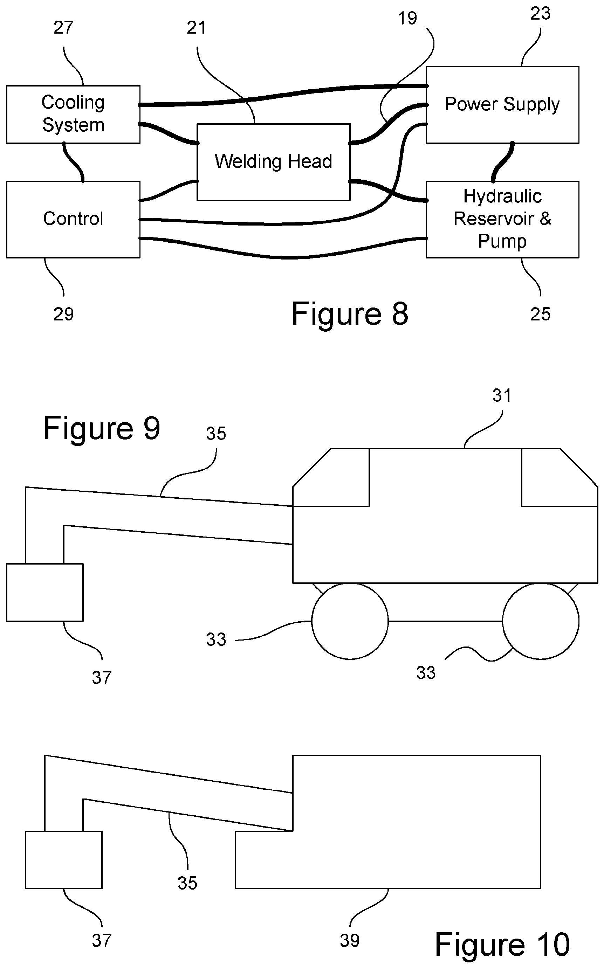

Figure 8 shows schematically a welding apparatus using the welding head components shown in Figure 7. The components shown in Figure 7 are contained in a welding head 21. This is connected to a power supply 23 for providing electric power to the induction coil unit or units 5, and also to other components requiring electric power. A hydraulic reservoir and pump unit 25 maintains a supply of pressurised hydraulic fluid and supplies it to the welding head 21 to drive the hydraulic cylinder 11, and also the hydraulic cylinder 15 if present. A cooling system 27 is connected to the welding head 21 to cool the induction heating coils. A control unit 29 is connected to the other components to control the operation of the welding apparatus, and includes input and output devices for an operator.

It is anticipated that the power supply 23 will normally need to deliver approximately 60 kW of electric power in order to drive the induction coil unit or units 5. By contrast, a flash butt welding apparatus may consume about 500 kW. Consequently, the power supply unit 23 can be substantially smaller and lighter than the power supply required in a flash butt welding apparatus. This in turn can make a welding apparatus according to the present embodiment substantially smaller, lighter and easier to manoeuvre than a flash butt welding apparatus. The power supply unit 23 may contain an electric generator, in order to make the welding apparatus self-contained. However, the relatively low power consumption of the induction coil unit or units 5 means that it may be possible in some circumstances to use an external source of electricity. For example, a metropolitan underground railway system may have three-phase electricity outlets in its tunnels. For a system that uses 230 V single phase, 400 V three phase, a three phase connection might need to supply about 175 A to power the apparatus as a whole, and this magnitude of current may be within the capacity of the electrical system powering the outlets. Consequently, the apparatus of Figure 8 may omit the electric generator from the power supply 23 in some cases. This further reduces the cost, size and weight of the apparatus.

The apparatus of Figure 8 may be provided as a free-standing unit, possibly without the hydraulic reservoir and pump unit 25 in order to save space if manual operation of the hydraulic cylinders is acceptable. However, the welding apparatus will more normally be provided on a vehicle.

Figure 9 shows a vehicle 31 comprising the welding apparatus of Figure 8. The vehicle 31 has an arrangement of wheels 33 which enable it to be driven on the ground and also to drive on a railway, as is known in the railway maintenance art. An arm 35, extending from the vehicle 31, carries a rail-engaging unit 37. The arm 35 can be raised and lowered, so as to allow the rail-engaging unit 37 to be placed over a rail join where a welded joint is to be formed.

The rail-engaging unit 37 includes the welding head 21 of Figure 8, and preferably also includes at least part of the control unit 29 together with some controls for moving the arm 35, in order to enable the welding apparatus to be controlled by an operator standing beside the track. However, the power supply 23 will normally be located in the main part of the vehicle 31 in view of its weight and bulk, and the hydraulic reservoir and pump unit 25 may be provided in the main part of the vehicle 31 also. The vehicle 31 of Figure 9 is a fully independent unit. It can be self-propelled and may include an electricity generator so that it can work substantially anywhere on a railway network.

Alternatively, the apparatus may be mounted on a frame or in a container 39, as shown in Figure 10. The apparatus of Figure 10 includes the arm 35 and the rail-engaging unit 37, and all the other parts of the welding apparatus of Figure 9. It may omit the electricity generator. The apparatus of Figure 10 may be mobile, and may be mounted on a road or rail vehicle for transport to a site where welding is required. It may be moved from vehicle to vehicle if this is desired.

## Claims

1. A method of welding railway rails comprising:
pushing the ends of first and second rails (1) away from each other;
placing a metal insert (3) between the ends of the first and second rails (1);
heating the ends of the first and second rails (1) by electromagnetic induction, to reach a welding temperature;
forcing the ends of the first and second rails (1) towards each other with a forging pressure, while the insert (3) is between the ends of the first and second rails (1), so as to move the rails towards each other and displace material in an upset phase to create a forge welded joint and thereby welding each of the first and second rails either to the insert (3) or to the other of the first and second rails.

2. A method according to claim 1 in which the ends of the first and second rails are pressed together with a force of 250 to 350 kN during the said step of forcing the ends of the first and second rails towards each other with a forging pressure.

3. A method according to claim 1 in which the ends of the first and second rails are pressed together with a force of 280 to 300 kN during the said step of forcing the ends of the first and second rails towards each other with a forging pressure.

4. A method according to any one of the preceding claims in which the insert is at least 6 mm long.

5. A method according to any one of the preceding claims in which the ends of the first and second rails are moved away from each other by at least 4 mm in total before the insert (3) is placed between them.

6. A method according to claim 5 in which the insert is at least 10 mm long.

7. A method according to any one of claims 1 to 4 in which the ends of the first and second rails are moved away from each other by at least 10 mm in total before the insert (3) is placed between them.

8. A method according to claim 7 in which the insert is at least 16 mm long.

9. A method according to any one of the preceding claims in which temperature, to which the ends of the rails are heated, is below the liquidus temperature of the insert (3).

10. A method according to any one of the preceding claims in which temperature, to which the ends of the rails are heated, is above the solidus temperature of the insert (3).

11. A method according to any one of the preceding claims in which a piece is cut from the end of each of the first and second rails (1) before the insert (3) is placed between them.

12. A method according to any one of the preceding claims which is carried out while the rails are attached to members that are in turn attached to other rails.

13. A method according to any one of the preceding claims in which the first and second rails are part of a pre-formed portion of railway track that includes at least one switch and at least one crossing.

14. Apparatus for welding railway rails, comprising:
first clamping means (9) for gripping a first rail (1);
second clamping means (9) for gripping a second rail (1);
means (11) for applying force to move the first and second clamping means towards each other while the first and second clamping means are gripping the first and second rails, so as to move the first and second rails towards each other, and for applying force to move the first and second clamping means away from each other while the first and second clamping means are gripping the first and second rails, so as to move the first and second rails away from each other; and
induction heating means (5), including at least one induction heating coil, placeable around rails gripped by the first and second clamping means at a position between the first and second clamping means (9), the heating means (5) being adapted to preferentially heat the regions around the ends of the first and second rails by having one of:
a single induction heating coil having a coil which is wound more densely where it encloses the ends of the first and second rails; and
first and second induction heating coils, each induction heating coil placed around the end of a respective rail (1).

15. Apparatus according to claim 14 in which the induction heating means (5) is movable between a closed state in which it can heat a rail (1) by electromagnetic induction, and an open state in which it can be withdrawn from a rail (1) by movement transversely of the rail.

16. Apparatus according to claim 14 or claim 15 in which the induction heating means (5) comprises first and second induction heating coils, and the first and second induction heating coils are movable relative to each other in a direction parallel to the direction of the said movement of the first and second clamping means towards and away from each other.

17. Apparatus according to any one of claims 14 to 16 in which means for applying force is arranged to apply force to move the first and second clamping means towards each other with a force of 250 to 350 kN.

18. Apparatus according to any one of claims 14 to 16 in which means for applying force is arranged to apply force to move the first and second clamping means towards each other with a force of 280 to 300 kN.

19. Apparatus according to any one of claims 14 to 18, further comprising a power supply (23) to generate electricity and control means (29).

20. A vehicle comprising the apparatus according to any one of claims 14 to 19.

## Patentansprüche

1. Verfahren zum Schweißen von Eisenbahnschienen, umfassend:
Drücken der Enden einer ersten und einer zweiten Schiene (1) weg voneinander;
Platzieren eines Metalleinsatzes (3) zwischen den Enden der ersten und der zweiten Schiene (1);
Erhitzen der Enden der ersten und der zweiten Schiene (1) durch elektromagnetische Induktion, um eine Schweißtemperatur zu erreichen;
Zusammendrücken der Enden der ersten und der zweiten Schiene (1) zueinander mit einem Schmiededruck, während der Einsatz (3) zwischen den Enden der ersten und der zweiten Schiene (1) ist, um die Schienen zueinander zu bewegen und Material in einer Stauchphase zu verschieben, um eine schmiedegeschweißte Verbindung zu erzeugen und dadurch jede von der ersten und der zweiten Schiene entweder mit dem Einsatz (3) oder mit der anderen von der ersten und der zweiten Schiene zu verschweißen.

2. Verfahren nach Anspruch 1, wobei die Enden der ersten und der zweiten Schiene mit einer Kraft von 250 bis 350 kN während des Schrittes des Zusammendrückens der Enden der ersten und der zweiten Schiene mit einem Schmiededruck zusammengedrückt werden.

3. Verfahren nach Anspruch 1, wobei die Enden der ersten und der zweiten Schiene mit einer Kraft von 280 bis 300 kN während des Schrittes des Zusammendrückens der Enden der ersten und der zweiten Schiene mit einem Schmiededruck zusammengedrückt werden.

4. Verfahren nach einem der vorhergehenden Ansprüche, wobei der Einsatz zumindest 6 mm lang ist.

5. Verfahren nach einem der vorhergehenden Ansprüche, wobei die Enden der ersten und der zweiten Schiene insgesamt um zumindest 4 mm weg voneinander bewegt werden, bevor der Einsatz (3) dazwischen platziert wird.

6. Verfahren nach Anspruch 5, wobei der Einsatz zumindest 10 mm lang ist.

7. Verfahren nach einem der Ansprüche 1 bis 4, wobei die Enden der ersten und der zweiten Schiene insgesamt um zumindest 10 mm weg voneinander bewegt werden, bevor der Einsatz (3) dazwischen platziert wird.

8. Verfahren nach Anspruch 7, wobei der Einsatz zumindest 16 mm lang ist.

9. Verfahren nach einem der vorhergehenden Ansprüche, wobei Temperatur, auf welche die Enden der Schienen erhitzt werden, unter der Liquidustemperatur des Einsatzes (3) ist.

10. Verfahren nach einem der vorhergehenden Ansprüche, wobei Temperatur, auf welche die Enden der Schienen erhitzt werden, über der Solidustemperatur des Einsatzes (3) ist.

11. Verfahren nach einem der vorhergehenden Ansprüche, wobei ein Stück von dem Ende von jeder von der ersten und der zweiten Schiene (1) abgeschnitten wird, bevor der Einsatz (3) dazwischen platziert wird.

12. Verfahren nach einem der vorhergehenden Ansprüche, das durchgeführt wird, während die Schienen an Elementen angebracht sind, die wiederum an anderen Schienen angebracht sind.

13. Verfahren nach einem der vorhergehenden Ansprüche, wobei die erste und die zweite Schiene Teil eines vorgeformten Eisenbahnschienenabschnittes sind, der zumindest eine Weiche und zumindest eine Kreuzung beinhaltet.

14. Vorrichtung zum Schweißen von Eisenbahnschienen, umfassend:
erste Klemmmittel (9) zum Greifen einer ersten Schiene (1);
zweite Klemmmittel (9) zum Greifen einer zweiten Schiene (1);
Mittel (11) zum Aufbringen von Kraft, um das erste und das zweite Klemmmittel zueinander zu bewegen, während das erste und das zweite Klemmmittel die erste und die zweite Schiene greifen, um die erste und die zweite Schiene zueinander zu bewegen, und zum Aufbringen von Kraft, um das erste und das zweite Klemmmittel weg voneinander zu bewegen, während das erste und das zweite Klemmmittel die erste und die zweite Schiene greifen, um die erste und die zweite Schiene weg voneinander zu bewegen; und
Induktionsheizmittel (5), das zumindest eine Induktionsheizspule beinhaltet, die um Schienen platzierbar ist, die durch das erste und das zweite Klemmmittel an einer Position zwischen dem ersten und dem zweiten Klemmmittel (9) gegriffen werden, wobei das Heizmittel (5) dazu ausgelegt ist, die Regionen um die Enden der ersten und der zweiten Schiene bevorzugt zu erhitzen, indem es eines von Folgendem aufweist:
eine Einzelinduktionsheizspule mit einer Spule, die an der Stelle, an der sie die Enden der ersten und der zweiten Schiene umschließt, dichter gewickelt ist; und
eine erste und eine zweite Induktionsheizspule, wobei jede Induktionsheizspule um das Ende einer jeweiligen Schiene (1) platziert ist.

15. Vorrichtung nach Anspruch 14, wobei das Induktionsheizmittel (5) zwischen einem geschlossenen Zustand, in dem es eine Schiene (1) durch elektromagnetische Induktion erhitzen kann, und einem offenen Zustand bewegbar ist, in dem es von einer Schiene (1) durch Bewegung quer zu der Schiene entnommen werden kann.

16. Vorrichtung nach Anspruch 14 oder Anspruch 15, wobei das Induktionsheizmittel (5) eine erste und eine zweite Induktionsheizspule umfasst und die erste und die zweite Induktionsheizspule relativ zueinander in einer Richtung parallel zu der Richtung der Bewegung des ersten und des zweiten Klemmmittels zueinander und weg voneinander bewegbar sind.

17. Vorrichtung nach einem der Ansprüche 14 bis 16, wobei Mittel zum Aufbringen von Kraft angeordnet ist, um Kraft aufzubringen, um das erste und das zweite Klemmmittel mit einer Kraft von 250 bis 350 kN zueinander zu bewegen.

18. Vorrichtung nach einem der Ansprüche 14 bis 16, wobei Mittel zum Aufbringen von Kraft angeordnet ist, um Kraft aufzubringen, um das erste und das zweite Klemmmittel mit einer Kraft von 280 bis 300 kN zueinander zu bewegen.

19. Vorrichtung nach einem der Ansprüche 14 bis 18, ferner umfassend eine Stromversorgung (23) zum Erzeugen von Elektrizität und Steuermittel (29).

20. Fahrzeug, umfassend die Vorrichtung nach einem der Ansprüche 14 bis 19.

## Revendications

1. Procédé de soudage de rails de chemin de fer comprenant :
l'écartement des extrémités des premier et second rails (1) l'une de l'autre ;
le mise en place d'un insert métallique (3) entre les extrémités des premier et second rails (1) ;
le chauffage des extrémités des premier et second rails (1) par induction électromagnétique, pour atteindre une température de soudage ;
le forçage des extrémités des premier et second rails (1) l'une vers l'autre avec une pression de forgeage, pendant que l'insert (3) est entre les extrémités des premier et second rails (1), de façon à rapprocher les rails l'un de l'autre et déplacer de la matière dans une phase de refoulement pour créer un joint soudé par forgeage et le soudage ainsi chacun des premier et second rails soit à l'insert (3) soit à l'autre des premier et second rails.

2. Procédé selon la revendication 1, dans lequel les extrémités des premier et second rails sont pressées l'une contre l'autre avec une force de 250 à 350 kN durant de ladite étape de forçage des extrémités des premier et second rails l'une vers l'autre avec une pression de forgeage.

3. Procédé selon la revendication 1, dans lequel les extrémités des premier et second rails sont pressées l'une contre l'autre avec une force de 280 à 300 kN durant ladite étape de forçage des extrémités des premier et second rails l'une vers l'autre avec une pression de forgeage.

4. Procédé selon l'une quelconque des revendications précédentes, dans lequel l'insert mesure au moins 6 mm de long.

5. Procédé selon l'une quelconque des revendications précédentes, dans lequel les extrémités des premier et second rails sont écartées l'une de l'autre d'au moins 4 mm au total avant que l'insert (3) ne soit placé entre elles.

6. Procédé selon la revendication 5, dans lequel l'insert mesure au moins 10 mm de long.

7. Procédé selon l'une quelconque des revendications 1 à 4, dans lequel les extrémités des premier et second rails sont écartées l'une de l'autre d'au moins 10 mm au total avant que l'insert (3) ne soit placé entre elles.

8. Procédé selon la revendication 7, dans lequel la première largeur mesure au moins 16 mm.

9. Procédé selon l'une quelconque des revendications précédentes, dans lequel la température à laquelle les extrémités des rails sont chauffées est inférieure à la température dite «liquidus» de l'insert (3).

10. Procédé selon l'une quelconque des revendications précédentes,dans lequel la température à laquelle les extrémités des rails sont chauffées est supérieure à la température dite «solidus» de l'insert (3).

11. Procédé selon l'une quelconque des revendications précédentes, dans lequel une pièce est découpée de l'extrémité de chacun des premier et second rails (1) avant que l'insert (3) ne soit placé entre eux.

12. Procédé selon l'une quelconque des revendications précédentes qui est effectué pendant que les rails sont attachés à des éléments qui sont à leur tour attachés à d'autres rails.

13. Procédé selon l'une quelconque des revendications précédentes, dans lequel les premier et second rails font partie d'une partie préformée de voie de chemin de fer qui comprend au moins un aiguillage et au moins un croisement.

14. Appareil destiné à souder des rails de chemin de fer, comprenant :
un premier moyen de serrage (9) destiné à saisir un premier rail (1) ;
un second moyen de serrage (9) destiné à saisir un second rail (1) ;
un moyen (11) pour appliquer une force pour rapprocher les premier et second moyens de serrage l'un vers l'autre pendant que les premier et second moyens de serrage saisissent les premier et second rails, de façon à rapprocher les premier et second rails l'un de l'autre, et pour appliquer une force pour écarter les premier et second moyens de serrage l'un de l'autre pendant que les premier et second moyens de serrage saisissent les premier et second rails, de façon à écarter les premier et second rails l'un de l'autre ; et
un moyen de chauffage par induction (5), comprenant au moins une bobine de chauffage par induction, pouvant être placé autour de rails saisis par les premier et second moyens de serrage au niveau d'une position entre les premier et second moyens de serrage (9), le moyen de chauffage (5) étant adapté pour chauffer préférentiellement les zones autour des extrémités des premier et second rails en possédant une parmi :
une bobine de chauffage par induction unique possédant une bobine qui est enroulée plus densément là où elle enferme les extrémités des premier et second rail ; et
des première et seconde bobines de chauffage par induction, chaque bobine de chauffage par induction étant placée autour de l'extrémité d'un rail respectif (1).

15. Appareil selon la revendication 14 dans lequel le moyen de chauffage par induction (5) est mobile entre un état fermé dans lequel il peut chauffer un rail (1) par induction électromagnétique, et un état ouvert dans lequel il peut être retiré d'un rail (1) par déplacement transversal du rail.

16. Appareil selon la revendication 14 ou la revendication 15, dans lequel le moyen de chauffage par induction (5) comprend des première et seconde bobines de chauffage par induction, et les première et seconde bobines de chauffage par induction sont mobiles l'une par rapport à l'autre dans une direction parallèle à la direction dudit déplacement des premier et second moyens de serrage l'un vers l'autre et s'éloignant l'un de l'autre.

17. Appareil selon l'une quelconque des revendications 14 à 16, dans lequel un moyen pour appliquer une force est agencé pour appliquer une force pour déplacer les premier et second moyens de serrage l'un vers l'autre avec une force de 250 à 350 kN.

18. Appareil selon l'une quelconque des revendications 14 à 16, dans lequel un moyen pour appliquer une force est agencé pour appliquer une force pour déplacer les premier et second moyens de serrage l'un vers l'autre avec une force de 280 à 300 kN.

19. Appareil selon l'une quelconque des revendications 14 à 18, comprenant en outre une alimentation électrique (23) pour générer de l'électricité et un moyen de commande (29).

20. Véhicule comprenant l'appareil selon l'une quelconque des revendications 14 à 19.
